(19) Europäisches Patentamt
European Patent Office
Office européen des brevets

(11) **EP 4 694 423 A1**

(12) **EUROPEAN PATENT APPLICATION**
published in accordance with Art. 153(4) EPC

(43) Date of publication:
**11.02.2026 Bulletin 2026/07**

(21) Application number: **23933380.0**

(22) Date of filing: **18.04.2023**

(51) International Patent Classification (IPC):
***H04W 64/00*** (2009.01)

(52) Cooperative Patent Classification (CPC):
**H04W 64/00**

(86) International application number:
**PCT/CN2023/089009**

(87) International publication number:
**WO 2024/216501 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHOU, Zhi
Shenzhen, Guangdong 518129 (CN)**
• **HE, Jia
Shenzhen, Guangdong 518129 (CN)**
• **LI, Xianjin
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD, COMMUNICATION DEVICE, STORAGE MEDIUM, AND PROGRAM PRODUCT**

(57)     Embodiments of this disclosure provide a communication method, a communication apparatus, a computer-readable storage medium, and a computer program product. In the method, a network apparatus obtains first positioning assistance information, where the first positioning assistance information includes first environment information, and the network apparatus performs positioning based on the first environment information. In this way, embodiments of this disclosure can improve positioning precision and environment precision.

200 ⤵

FIG. 2

EP 4 694 423 A1

## Description

### TECHNICAL FIELD

This disclosure generally relates to the telecommunications field, and more specifically, to a communication method, a communication apparatus, a computer-readable storage medium, and a computer program product.

### BACKGROUND

Integrated sensing and communication is an information processing technology that implements collaboration between a sensing function and a communication function based on software and hardware resource sharing or information sharing. For positioning in communication, position computing is performed mainly based on an angle and a delay. However, an error usually exists in a measured angle and delay, and this error causes a positioning error space (that is, a positioning error range). Sensing environment information plays an indispensable role in multipath target positioning in non-line-of- sight (non-line-of-sight, NLOS)/line-of-sight (line-of-sight, LOS) scenarios. Currently, there are some positioning solutions in which technologies such as TDoA (Time Difference of Arrival, time difference of arrival), a DL-AoD (downlink angle-of-departure), and multi-cell RTT (multi-cell round trip time) are used for positioning. In the NLOS scenario, positioning precision of these positioning solutions decreases sharply.

### SUMMARY

This disclosure provides a communication method, a communication apparatus, a computer-readable storage medium, and a computer program product, to improve positioning precision and environment precision.

According to a first aspect, a communication method is provided. The method may be performed by a communication apparatus, which may be specifically a network apparatus. The network apparatus is, for example, a network device or a chip used in a network device. The following provides descriptions by using an example in which the method is performed by the network apparatus. In the method, the network apparatus obtains first positioning assistance information, where the first positioning assistance information includes first environment information, and the network apparatus performs positioning based on the first environment information. In this manner, positioning precision can be improved.

In some implementations, the first environment information is initial environment information, the first positioning assistance information further includes multipath information, and the method in the first aspect further includes: The network apparatus sends a reporting criterion about the multipath information to a terminal apparatus; and the network apparatus receives the multipath information reported by the terminal apparatus according to the reporting criterion. The multipath information is reported according to the reporting criterion configured by the network apparatus, so that overheads of position computing on a network apparatus side can be reduced.

In some implementations, performing the positioning includes: The network apparatus determines location information of the terminal apparatus based on the first environment information and the multipath information. In this manner, the overheads of the position computing of the network apparatus are reduced, and positioning precision is improved.

In some implementations, the method in the first aspect further includes: The network apparatus sends at least one of the location information of the terminal apparatus and second environment information to the terminal apparatus, where the second environment information is obtained based on the first environment information. Environment information precision at the terminal apparatus can be improved.

In some implementations, the positioning in the method in the first aspect is first positioning, and the method in the first aspect further includes: Before obtaining the first positioning assistance information, the network apparatus sends second positioning assistance information to the terminal apparatus, where the second positioning assistance information is used by the terminal apparatus to perform second positioning. In this way, a part of position computing related to sensing-assisted positioning may be performed on a terminal apparatus side, so that overheads of position computing of the network apparatus are reduced.

In some implementations, the second positioning assistance information includes initial environment information and location information of the network apparatus. The initial environment information and the location information of the network apparatus may be used to implement position computing at the terminal apparatus.

In some implementations, the first positioning assistance information further includes a cost function obtained by the terminal apparatus through the second positioning, and obtaining the first positioning assistance information includes: The network apparatus receives the cost function and the first environment information from the terminal apparatus, where the first environment information is obtained based on the initial environment information. In this way, the network apparatus may determine, based on the cost function provided by the terminal apparatus, whether to update the environment information. This helps improve precision of the environment information.

In some implementations, performing the first positioning includes: The network apparatus obtains third environment information based on the cost function and the first environment information. In this manner, environment information precision and the positioning precision are improved.

In some implementations, the method further includes: The network apparatus sends the third environment information to the terminal apparatus. In this way, the terminal apparatus can obtain updated environment information. This improves environment precision at the terminal apparatus, and helps the terminal apparatus improve positioning precision through the position computing.

In some implementations, the first environment information includes at least one group of the following information: a serial number of a reconstructed plane of an environment and a correction distance and a correction angle of the reconstructed plane; or the serial number of the reconstructed plane and a vertex position of the reconstructed plane.

According to a second aspect, a communication method is provided. The method may be performed by a communication apparatus, which may be specifically a terminal apparatus. The terminal apparatus is, for example, a terminal device or a chip used in a terminal device. The following provides descriptions by using an example in which the method is performed by the terminal apparatus. In the method, the terminal apparatus obtains second positioning assistance information, where the second positioning assistance information includes initial environment information; and the terminal apparatus performs positioning based on the initial environment information.

In some implementations, the second positioning assistance information further includes location information of a network apparatus, and obtaining the second positioning assistance information includes: The terminal apparatus receives the initial environment information and the location information of the network apparatus that are sent by the network apparatus. Therefore, the terminal apparatus may perform position computing, and overheads of position computing of the network apparatus are reduced.

In some implementations, performing the positioning includes: The terminal apparatus determines first environment information based on the location information of the network apparatus and the initial environment information. Therefore, positioning precision can be improved, and the overheads of the position computing of the network apparatus can be reduced.

In some implementations, a cost function is further obtained through the positioning. The method in the first aspect further includes: The terminal apparatus sends the cost function and the first environment information to the network apparatus, where the cost function is used by the network apparatus to perform positioning. Both the positioning precision and environment precision are improved.

In some implementations, the method in the second aspect further includes: After sending the cost function and the first environment information to the network apparatus, the terminal apparatus receives third environment information sent by the network apparatus, where the third environment information is obtained by the network apparatus through the positioning. In this way, the environment information of the terminal apparatus is more precise.

In some implementations, the method further includes: The terminal apparatus receives a reporting periodicity sent by the network apparatus, where the reporting periodicity is used by the terminal apparatus to report the first environment information. In this way, the terminal apparatus may report the environment information in a manner configured by the network apparatus.

In some implementations, reporting the first environment information includes: The terminal apparatus sends the first environment information to the network apparatus based on the reporting periodicity. In this way, the terminal apparatus may report the environment information based on a periodicity configured by the network apparatus. This improves environment information reporting efficiency.

In some implementations, the method in the first aspect may further include: The terminal apparatus obtains privacy setting information, where reporting the first environment information includes: When determining that the privacy setting information allows reporting of the first environment information, the terminal apparatus sends the first environment information to the network apparatus. In this manner, privacy of the terminal apparatus can be protected.

In some implementations, the initial environment information includes at least one group of the following information: a serial number of a reconstructed plane of an environment and a correction distance and a correction angle of the reconstructed plane; or the serial number of the reconstructed plane and a vertex position of the reconstructed plane. Therefore, sensing-assisted positioning can be performed based on the environment information, to improve positioning precision.

According to a third aspect, a communication apparatus is provided. For beneficial effects, refer to descriptions in the first aspect. Details are not described herein again. The apparatus has a function of implementing behavior in the method example in the first aspect. The function may be implemented by hardware, or may be implemented by hardware executing corresponding software. The hardware or the software includes one or more modules corresponding to the function. In a possible design, the apparatus includes: an obtaining unit, configured to obtain first positioning assistance information, where the first positioning assistance information includes environment information; and a positioning unit, configured to perform positioning based on first environment information.

According to a fourth aspect, a communication apparatus is provided. For beneficial effects, refer to descriptions in the second aspect. Details are not described herein again. The apparatus has a function of implementing behavior in the method example in the first aspect. The function may be implemented by hardware, or may be implemented by hardware executing corresponding software. The hardware or the software includes one or more modules corresponding to the function. In a possible design, the apparatus includes: an obtaining unit, configured to obtain second positioning assistance information, where the second positioning assistance information includes initial environment information; and a positioning unit, configured to perform positioning based on the initial environment information.

According to a fifth aspect, a communication apparatus is provided, and includes a processor and a memory storing instructions. When the instructions are executed by the processor, any method according to the first aspect or the second aspect and the implementations of the first aspect or the second aspect is performed.

According to a sixth aspect, a computer-readable storage medium is provided. The computer-readable storage medium stores instructions, and when the instructions are executed by an electronic device, the electronic device is enabled to perform the method performed by the communication apparatus in the foregoing aspects.

According to a seventh aspect, a computer program product is provided. The computer program product includes instructions, and when the instructions are executed by an electronic device, the electronic device is enabled to perform the method performed by the communication apparatus in the foregoing aspects.

According to an eighth aspect, this disclosure provides a chip system. The chip system includes a processor, configured to implement functions performed by the communication apparatus (for example, the network apparatus or the terminal apparatus) in the methods in the foregoing aspects. In a possible design, the chip system further includes a memory, configured to store program instructions and/or data. The chip system may include a chip, or may include a chip and another discrete component.

According to a ninth aspect, this disclosure further provides a communication system, including a communication apparatus configured to perform the method in the first aspect or the method in the second aspect.

## BRIEF DESCRIPTION OF DRAWINGS

FIG. 1A is a diagram of a communication system according to some embodiments of this disclosure;
FIG. 1B is a diagram of multipath positioning according to some embodiments of this disclosure;
FIG. 1C is a diagram of a positioning procedure according to some embodiments of this disclosure;
FIG. 2 is a schematic flowchart of an example of a communication method according to some embodiments of this disclosure;
FIG. 3 is a diagram of an environment reconstruction error according to some embodiments of this disclosure;
FIG. 4 is a diagram of a cost function of an optimization problem according to some embodiments of this disclosure;
FIG. 5 is a schematic flowchart of implementing a positioning algorithm according to some embodiments of this disclosure;
FIG. 6 is a schematic flowchart of implementing a positioning algorithm according to some other embodiments of this disclosure;
FIG. 7 is a diagram of a positioning procedure according to some other embodiments of this disclosure;
FIG. 8 is a schematic flowchart of implementing a positioning algorithm according to still some embodiments of this disclosure;
FIG. 9 is a diagram of a positioning procedure according to still some other embodiments of this disclosure;
FIG. 10 is a schematic flowchart of implementing a positioning algorithm according to still some embodiments of this disclosure;
FIG. 11 is a diagram of a positioning procedure according to still some other embodiments of this disclosure;
FIG. 12 is a diagram of main composition of an example device in a possible implementation according to an embodiment of this disclosure; and
FIG. 13 is a simplified block diagram of an example device in a possible implementation according to an embodiment of this disclosure.

## DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below. The term "determining" may cover a variety of actions. For example, "determining" may include computing, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

Embodiments of this disclosure may be implemented according to any proper communication protocol, including but not limited to cellular communication protocols such as 4th generation (4G), 5th generation (5G), and future (for example, 6th generation (6G)) communication protocols, a wireless local area network communication protocol like the institute of electrical and electronics engineers (Institute of Electrical and Electronics Engineers, IEEE) 802.11 (for example, Wi-Fi 7 and Wi-Fi 8), and/or any other protocol currently known or developed in the future.

Technical solutions in embodiments of this disclosure are applied to a communication system that complies with any proper communication protocol, for example, a general packet radio service (General Packet Radio Service, GPRS) system, a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA 2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), and a future communication system (for example, a 6th generation (6G) system).

For the purpose of illustration, the following describes embodiments of this disclosure in the context of a 5G communication system in 3GPP. However, it should be understood that embodiments of this disclosure are not limited to the communication system, but may be applied to any communication system having a similar problem, for example, a wireless local area network (WLAN), a wired communication system, or another communication system developed in the future.

The term "terminal" or "terminal device" used in this disclosure refers to any terminal device that can perform wired or wireless communication with a network device or any terminal devices that can perform wired or wireless communication with each other. The terminal device may be sometimes referred to as a user equipment (User Equipment, UE). The terminal device may be any type of mobile terminal, fixed terminal, or portable terminal. The terminal device may be various wireless communication devices that have a wireless communication function. With emergence of an internet of things (Internet of Things, IoT) technology, more devices that previously have no communication function, for example without limitation to, a household appliance, a transportation tool, a tool device, a service device, and a service facility, start to obtain a wireless communication function by being configured with a wireless communication unit, to access a wireless communication network, and accept remote control. Such a device has the wireless communication function because the device is configured with the wireless communication unit, and therefore also belongs to a scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modulator demodulator (Modulator demodulator, Modem), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device (for example, a smart watch), a terminal device in a 5G network or any terminal device in an evolved public land mobile network (Public Land Mobile Network, PLMN), another device that can be used for communication, or any combination thereof. This is not limited in embodiments of this disclosure.

The term "network node" or "network device" used in this disclosure is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. The base station is configured to provide a wireless access service for the terminal device. Specifically, each base station corresponds to a service coverage area, and a terminal device entering the area may communicate with the base station by using a radio signal, to receive a radio access service provided by the base station. The service coverage areas of the base stations may overlap, and a terminal device in an overlapping area may receive radio signals from a plurality of base stations. Therefore, the plurality of base stations may simultaneously provide services for the terminal device. Based on a size of the provided service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, remote radio units (Remote Radio Units, RRUs), radio frequency heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components of one rack. For ease of description, in subsequent embodiments of this disclosure, the foregoing apparatuses that provide a wireless communication function for the mobile terminal are collectively referred to as the network device. The apparatus may alternatively be a chip or a module that is in the mobile terminal or the access network device and that implements a related wireless communication function. This is not specifically limited in embodiments of this disclosure.

Integrated sensing and communication can effectively improve system spectral efficiency, hardware efficiency, and information processing efficiency. Some positioning technologies used for positioning in communication, for example, a solution using TDoA (Time Difference of Arrival, time difference of arrival), DL-AoD (downlink angle-of-departure), or multi-cell RTT (multi-cell round trip time), have a sharp decrease in positioning precision in an NLOS scenario, and may also face a severe problem of inter-site synchronization. For positioning in communication, position computing is mainly performed based on an angle and a delay. However, an error usually exists in a measured angle and delay, and causes a positioning error space. Joint positioning of a plurality of NLOS paths based on environment information greatly reduces the positioning error space and significantly improves the positioning precision. In the NLOS scenario, a communication signal and environment information need to be used for collaborative positioning. Due to an environment error, information transmission between a terminal device and a base station needs to be introduced, to optimize both environment and positioning information. Based on this, embodiments of this disclosure provide a solution for improving positioning precision and environment precision based on environment information. To make objectives, technical solutions, and advantages of this disclosure clearer, the following further describes this disclosure in detail with reference to the accompanying drawings. Specific operation methods, function descriptions, and the like in method embodiments may also be applied to apparatus embodiments or system embodiments.

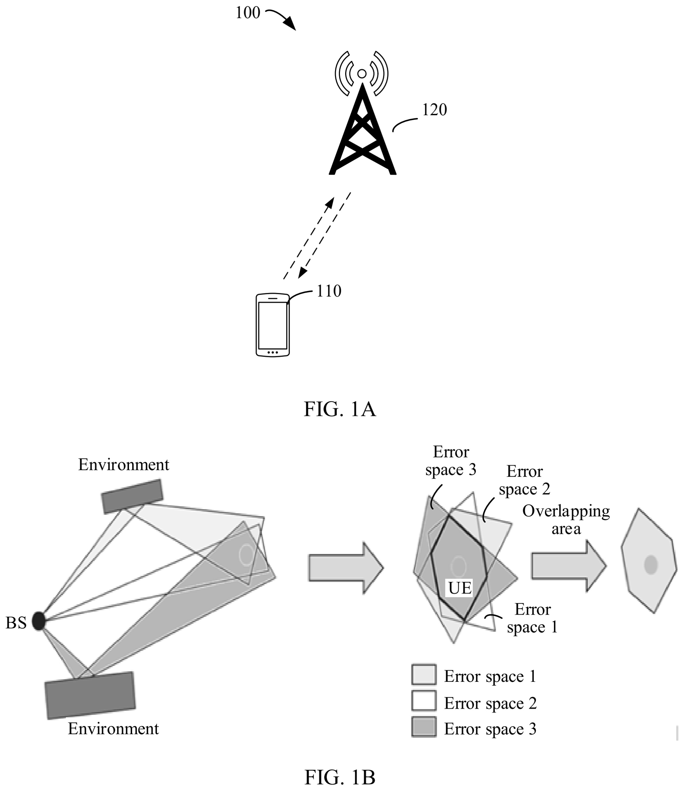

As shown in FIG. 1A, a communication system 100 in some embodiments of this disclosure may include a terminal device 110 and a network device 120. The network device 120 and the terminal device 110 may communicate with each other. In some examples, the terminal device 110, the network device 120, or the terminal device 110 and the network device 120 may perform positioning. For example, the positioning may include performing position computing, to determine location information of the terminal device 110. To perform positioning, the terminal device 110 and the network device 120 may send information to each other or receive information from each other. For example, sent information may be positioning assistance information, and a party that receives the positioning assistance information may perform positioning based on the positioning assistance information. There may be a plurality of terminal devices 110 and network devices 120 shown in the communication system 100.

The network device 120 may be a network device in various network systems. For example, the network device 120 may be any device having a wireless transceiver function. The network device 120 includes but is not limited to: a conventional macro base station eNB (evolved NodeB) in a conventional UMTS/LTE (Universal Mobile Telecommunications System, universal mobile telecommunications system/Long Term Evolution, long term evolution) wireless communication system, a micro base station eNB in a HetNet (Heterogeneous Network, heterogeneous network) scenario, a baseband processing unit BBU (Baseband Unit, baseband unit) and a radio frequency unit RRU (Remote Radio Unit, remote radio unit) in a distributed base station scenario, a baseband pool BBU pool and a radio frequency unit RRU in a CRAN (Cloud Radio Access Network, cloud radio access network) scenario, a gNB in a future wireless communication system, an evolved base station in 3GPP, an access node in a Wi-Fi system, a wireless relay node, a wireless backhaul node, and the like. The base station may be a macro base station, a micro base station, a picocell base station, a small cell, a relay station, a balloon station, or the like. The network device 120 may alternatively be a server, a wearable device, a vehicle-mounted device, or the like.

The terminal device 110 may be various user communication devices, for example, may be a vehicle-mounted communication module or another embedded communication module, a mobile phone (mobile phone), a tablet computer (Pad), a computer having a wireless transceiver function, a virtual reality (VR) terminal device, an augmented reality (AR) terminal device, a wireless terminal in industrial control (industrial control), a tactile terminal device, a vehicle-mounted terminal device, a wireless terminal in self driving, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like.

For example, the network device 120 is a BS (base station), and the terminal device 110 is a UE (user equipment). FIG. 1B is a diagram of multipath positioning according to some embodiments of this disclosure. As shown in FIG. 1B, the BS positions a target based on a direct path and a reflection path in an environment. Because an error exists in a measured angle and delay, each path has an error angle. Consequently, an area is positioned for the target, and the area is an error space (where three paths in FIG. 1B are used as an example, and correspond to three error spaces: an error space 1, an error space 2, and an error space 3). FIG. 1B shows areas positioned by different paths. It can be seen that the error spaces of the three paths overlap, that is, there is an overlapping area shown in FIG. 1B.

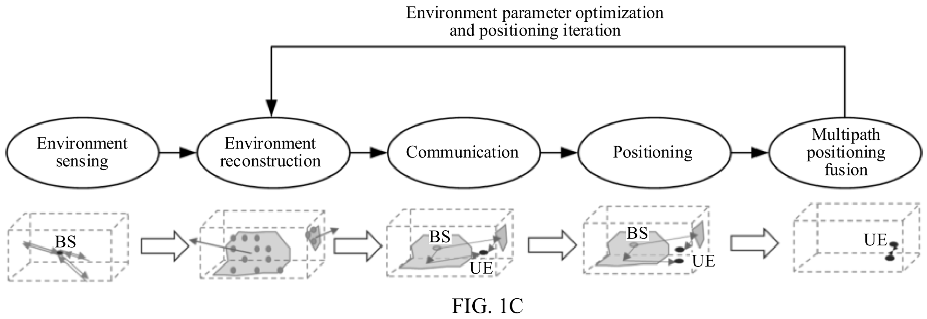

FIG. 1C is a diagram of a positioning procedure according to some embodiments of this disclosure. As shown in FIG. 1C, in an environment sensing step, the BS senses an ambient environment, to obtain sensing data, for example, point cloud data. A dashed box in the figure is an example of an indoor environment. In an environment reconstruction step, the BS may perform environment reconstruction by using the obtained sensing data, for example, reconstruct an indoor environment (for example, a wall). In a communication step and a positioning step, the BS performs multipath positioning by communicating with the UE. In a multipath positioning fusion step, the BS updates an environment parameter through a plurality of iterations, and obtains a final environment parameter and a positioning result after the iterations are completed. An environment-space alternate iteration algorithm is used. In the positioning algorithm, environment and space positioning are alternately iterated, so that an environment error is corrected and positioning precision is improved.

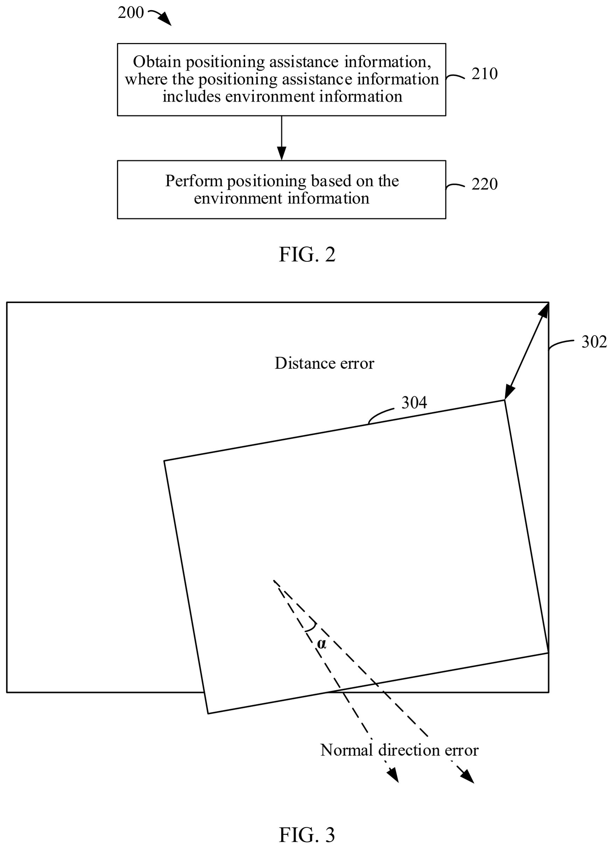

FIG. 2 is a schematic flowchart of an example of a communication method according to an embodiment of this disclosure. As shown in FIG. 2, in an example procedure 200 of a communication method according to some embodiments of this disclosure, in 210, a communication apparatus may obtain positioning assistance information, where the positioning assistance information includes environment information. In 220, the communication apparatus performs positioning based on the environment information. The positioning may be understood as performing position computing, for example, may be computing a positioning intermediate quantity before location information is finally determined, may be determining location information, or may be determining other information used to computing location information.

The procedure 200 may be performed by the communication apparatus. Specifically, in some embodiments, the communication apparatus that performs the procedure 200 may be a network apparatus, for example, the network device 120 or a chip in the network device 120. In some other embodiments, the communication apparatus that performs the procedure 200 may be a terminal apparatus, for example, the terminal device 110 or a chip in the terminal device 110.

The following describes some embodiments in which the network apparatus performs the procedure 200. In these embodiments, the positioning assistance information in 210 may be referred to as first positioning assistance information, and the environment information in the first positioning assistance information may be referred to as first environment information.

In some examples, the first environment information may be initial environment information obtained through environment sensing and environment reconstruction. For example, the communication apparatus is the network device 120 in FIG. 1A. The network device 120 may obtain environment information through environment sensing and environment reconstruction. For example, referring to FIG. 1C, the network device 120 obtains sensing data by sensing an ambient environment, and performs environment reconstruction to reconstruct a plane in the environment, so as to obtain environment information. The environment information obtained by the network device 120 through the environment sensing and the environment reconstruction may be referred to as the initial environment information.

In some other examples, the first environment information may be environment information updated based on initial environment information. For example, the network device 120 obtains the initial environment information through environment sensing and environment reconstruction. The network device 120 may deliver the initial environment information to the terminal device 110, and the terminal device 110 performs positioning based on the initial environment information to obtain updated environment information, and then sends the updated environment information to the network device 120, so that the network device 120 performs positioning. For the network device 120, in the procedure 200, the updated environment information used by the network device 120 for positioning may be referred to as the first environment information, and is received from the terminal device 110.

In some examples, the environment information (or the updated environment information) may specifically include a serial number of a reconstructed plane of an environment and a correction distance and a correction angle of the reconstructed plane. In some other examples, the environment information (or the updated environment information) may include a serial number of a reconstructed plane and a vertex position of the reconstructed plane.

The positioning in embodiments of this disclosure may be referred to as sensing-assisted positioning in some embodiments. The positioning includes performing corresponding position computing by using a positioning algorithm, to determine the location information of the terminal device 110, and updating environment information on which the positioning is based. For example, the communication apparatus may update, based on a serial number of a reconstructed plane, a correction distance and a correction angle of the corresponding reconstructed plane, or update a vertex position of the corresponding reconstructed plane.

Due to an environment error, environment-based multipath positioning may be severely deviated. In some embodiments, for a diagram of an environment reconstruction error in an application scenario in which a single station or multiple stations (a plurality of base stations) perform positioning on a same terminal device 110, for example, a UE, based on two or more paths, refer to FIG. 3. There is an error between sensed environment information and actual environment information, and the error may be classified into two types: a distance error and a normal direction error. The environment reconstruction error may be represented by using the distance error and the normal direction error. The distance error may be an absolute position of centers of two planes (an environment plane 302 and a reconstructed plane 304). The normal direction error may be an error between normal vectors of normal directions of the two planes, and may be represented as an angle error. The environment reconstruction error causes a severe deviation in environment-based multipath positioning, as shown in Table 1.

Table 1

| Path | Environment error | | Positioning error (m) |
|---|---|---|---|
| | Distance error (cm) | Angle error (°) | |
| Path 1 | 2.71 | 4.40 | 1.31 |
| Path 2 | 5.23 | 3.30 | 0.17 |

If there is no environment error, a plurality of NLOS paths used to position a same UE converge at one point. In the positioning algorithm in embodiments of this disclosure, an optimization problem may be established based on prior knowledge. A cost function of the optimization problem is as follows:

$$[\hat{l}_1, \hat{\beta}_1, \cdots, \hat{l}_n, \hat{\beta}_n] = \arg \min (d_1 + d_2 + \cdots + d_n)$$

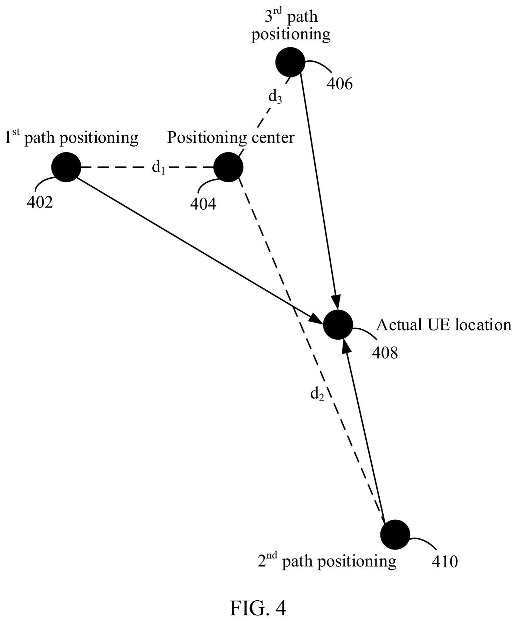

Based on the cost function of the optimization problem, referring to FIG. 4, there are a plurality of paths in multipath positioning. For ease of description, three paths are used as an example in FIG. 4. A positioning center 404 may be determined based on positioning points 402, 406, and 410 of the three paths, distances from the positioning points 402, 406, and 410 of the paths to the positioning center 404 are respectively $d_1$, $d_3$, and $d_2$, and an actual UE location is 408. A target is to minimize a value of $d_1 + d_2 + ... + d_n$ (where n is a quantity of paths, and n is 3 in this example). After a plurality of iterations, a positioning result is continuously closer to the actual UE location. This improves environment precision and reduces a positioning error. Although such an optimization problem solving algorithm greatly improves positioning precision and environment sensing precision, there is also a higher requirement on a computing capability of the BS (the example of the network device 120) and the UE (the example of the terminal device 110) and information exchange between the BS and the UE.

In a first embodiment of this disclosure, the communication apparatus that performs the procedure 200 is specifically a network apparatus, for example, the network device 120. The following uses an example in which the network apparatus is the network device 120 for description. The network device 120 obtains positioning assistance information (or referred to as first positioning assistance information). For example, the network device 120 may obtain information such as environment information (or referred to as first environment information) and multipath information required for positioning, and perform positioning based on the information.

The following further describes a specific manner in which the network device 120 obtains various types of information in the positioning assistance information in the procedure 200. The first environment information is obtained by the network device 120 through environment sensing and environment reconstruction. The multipath information may be reported by the terminal device 110 to the network device 120. It may be understood that although sources of the first environment information and the multipath information are different, both the first environment information and the multipath information are used by the network device to perform position computing. Therefore, it may be considered that both the first environment information and the multipath information are included in the first positioning assistance information. The terminal device 110 may report the multipath information to the network device 120 in a plurality of manners. For example, the terminal device 110 may autonomously report the multipath information, or the terminal device 110 may report the multipath information according to a criterion configured by the network device 120. The multipath information reported by the terminal device 110 may include one or more types of information, for example, an AoA (angle of arrival), a delay (delay), and an SNR (signal-to-noise ratio) of a path.

In an embodiment, the network device 120 may first send a reporting criterion about the multipath information to the terminal device 110, and the terminal device 110 performs reporting according to the reporting criterion, so that the network device 120 may receive, from the terminal device 110, the multipath information reported by the terminal device 110 according to the reporting criterion. The reporting criterion may specifically include one or more criteria used by the terminal device 110 to determine whether to report the multipath information. For example, the reporting criterion may be one or more of the following criteria: A path whose SNR is less than an SNR threshold is not reported; a path whose SNR difference from a path with a strongest SNR is greater than a threshold is not reported; a path whose Doppler absolute value is less than (static) or greater than (high-speed) a threshold is not reported; when an AoA difference between paths is less than a threshold, only one of the paths is reported; or when a quantity of reported paths reaches a threshold, no more path is reported.

In addition to the reporting criterion, the network device 120 may further send some related thresholds in the foregoing criterion to the terminal device 110. Alternatively, a related threshold in the foregoing reporting criterion may be preset in the network device 120 and/or the terminal device 110. Optionally, the network device 120 may further send a positioning reference signal (PRS) to the terminal device 110.

Based on the first embodiment, the network device 120 performs the positioning based on the obtained first environment information and the multipath information reported by the terminal device 110, to determine location information of the terminal device 110. In some examples, the network device 120 further updates the environment information in a positioning process. To be specific, the network device 120 may further obtain updated environment information (or referred to as second environment information, where the second environment information is obtained by updating the first environment information) through the positioning. For the obtained location information of the terminal device 110 and the obtained second environment information, the network device 120 may send either the location information or the second environment information to the terminal device 110, or send the two types of information together to the terminal device 110.

In a second embodiment of this disclosure, in a same procedure, both the terminal apparatus and the network apparatus may perform position computing. For example, the terminal apparatus is the terminal device 110, and the network apparatus is the network device 120. Both the terminal device 110 and the network device 120 may perform the following operations in the procedure 200: obtaining environment information and performing positioning based on the environment information, where positioning assistance information includes the environment information. When the network apparatus performs the procedure 200, the positioning assistance information is first positioning assistance information, and the environment information is first environment information. When the terminal apparatus performs the procedure 200, the positioning assistance information is second positioning assistance information, and the environment information is initial environment information.

Specifically, the network device 120 sends, to the terminal device 110, the positioning assistance information used by the terminal device 110 to perform positioning. The terminal device 110 obtains the positioning assistance information from the network device 120, where the positioning assistance information may include the environment information and location information of the network device 120. The environment information in the positioning assistance information obtained from the network device 120 may be obtained by the network device 120 through environment sensing, environment reconstruction, and the like, or may be referred to as the initial environment information. The terminal device 110 performs position computing based on the positioning assistance information, for example, the initial environment information and the location information of the network device 120, obtained from the network device 120, to obtain a cost function (referring to the foregoing related descriptions) and updated environment information. The cost function and the updated environment information may be used as positioning assistance information used by the network device 120 to perform positioning.

For the network device 120, the network device 120 obtains, from the terminal device 110, the positioning assistance information, for example, the cost function and the updated environment information at the terminal device 110, used by the network device 120 to perform positioning, and performs the positioning based on the positioning assistance information, to obtain updated environment information at the network device 120. Optionally, the network device 120 may send the updated environment information at the network device 120 to the terminal device 110.

The following further describes the procedure 200 in FIG. 2 with reference to the foregoing descriptions of the second embodiment.

Based on the foregoing second embodiment, when the terminal device 110 performs the procedure 200, the positioning assistance information obtained by the terminal device 110 from the network device 120 may be referred to as the second positioning assistance information, the environment information obtained by the terminal device 110 from the network device 120 is the initial environment information, the positioning performed by the terminal device 110 may be referred to as third positioning, and the updated environment information obtained by the terminal device 110 through positioning may be referred to as the first environment information. The terminal device 110 may send the first environment information and the cost function obtained through the third positioning to the network device 120, to perform positioning at the network device 120. The updated environment information that is sent by the network device 120 and received by the terminal device and that is at the network device 120 may be referred to as third environment information, and the positioning performed by the network device 120 to obtain the third environment information may be referred to as fourth positioning.

Based on the second embodiment, when the network device 120 performs the procedure 200, the positioning performed by the network device 120 may be referred to as first positioning, and the positioning assistance information that is obtained by the network device 120 from the terminal device 110 and that is used by the network device 120 to perform positioning may be referred to as the first positioning assistance information. Before the network device 120 performs the first positioning, the network device 120 sends, to the terminal device 110, positioning assistance information (which may be referred to as the second positioning assistance information) used by the terminal device 110 to perform positioning (which may be referred to as second positioning). The second positioning assistance information includes the initial environment information and the location information of the network device 120, and the first positioning assistance information includes the cost function and the first environment information (where in this example, the first environment information refers to the updated environment information at the terminal device) obtained by the terminal device 110 through the positioning. The network device obtains the third environment information (that is, the updated environment information at the network device) by performing the first positioning.

In a third embodiment of this disclosure, the communication apparatus that performs the procedure 200 is specifically the terminal apparatus, for example, the terminal device 110. The following uses an example in which the terminal apparatus is the terminal device 110 for description. The terminal device 110 may obtain positioning assistance information (which may be referred to as second positioning assistance information) from the network device 120. The positioning assistance information may include environment information (that is, initial environment information) and location information of the network device 120. For example, the terminal device 110 may receive the initial environment information and the location information of the network device 120 that are sent by the network device 120, and perform positioning based on the initial environment information and the location information of the network device 120. Through the positioning, the terminal device 110 may determine location information of the terminal device 110 and obtain first environment information (that is, updated environment information at the terminal device 110) based on the initial environment information.

The terminal device 110 may select to report or not report the updated environment information at the terminal device 110 to the network device 120. In an embodiment of reporting the updated environment information, the terminal device 110 may periodically report the updated environment information. In some embodiments, the network device 120 may indicate, to the terminal device 110, a reporting periodicity used by the terminal device 110 to report the updated environment information. For example, the terminal device 110 receives the reporting periodicity sent by the network device 120, and sends the updated environment information (the first environment information) to the network device 120 based on the reporting periodicity.

In some scenarios, to meet a requirement of protecting privacy at the terminal device 110, the terminal device 110 may select, according to a privacy policy, whether to report the updated environment information. For example, the terminal device 110 may obtain privacy setting information, and send the updated environment information to the network device 120 when determining that the privacy setting information allows reporting of the updated environment information (the first environment information) at the terminal device 110.

In a possible implementation, the foregoing three embodiments (the first embodiment to the third embodiment) may be considered as three sensing-assisted positioning modes (modes for short). For example, the network device 120 is the base station (BS for short) and the terminal device 110 is the UE. Before interaction between the base station and the UE is performed, the base station selects a mode, that is, selects a mode from three modes (mode 1, mode 2, and mode 3, which are respectively corresponding to the first embodiment, the second embodiment, and the third embodiment). For specific implementation of selecting the three modes, refer to the following embodiments. After selecting a corresponding mode, the base station may complete information exchange between the base station and the terminal based on a procedure corresponding to the mode.

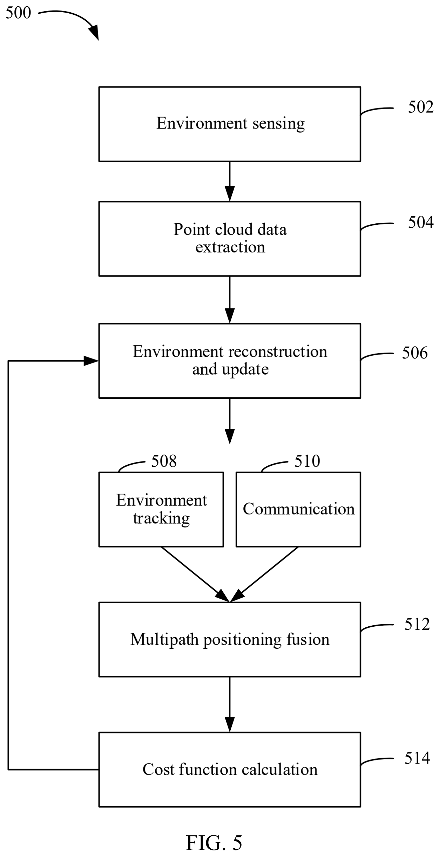

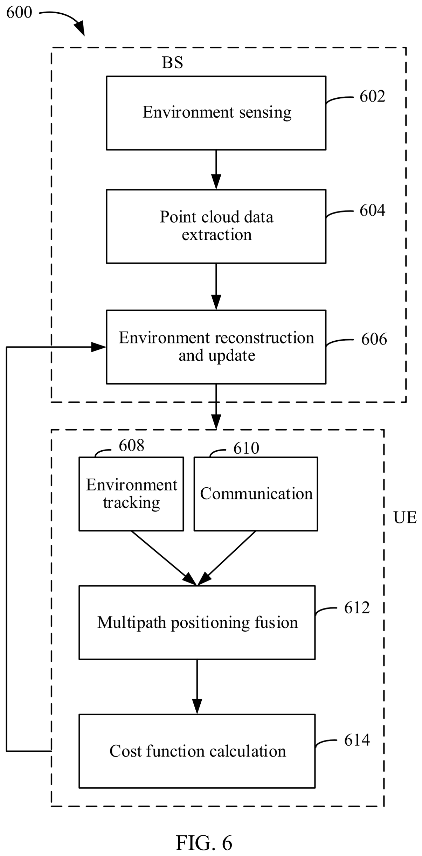

FIG. 5 is a schematic flowchart of implementing a positioning algorithm according to some embodiments of this disclosure. As shown in FIG. 5, in a procedure 500, environment sensing (502) is first performed. For example, a BS senses an ambient environment to obtain sensing data. Then, point cloud data extraction (504) is performed, and environment reconstruction and update (506) are performed. In a sensing-assisted positioning process, multipath positioning fusion (512) is performed through environment tracking (508) and communication (510) between the BS and a UE, and then cost function calculation (514) is performed. An environment parameter is updated through a plurality of iterations. After the iterations are completed, a final environment parameter and a positioning result are obtained. The environmental parameter is also referred to as environment information in embodiments of this disclosure. For different embodiments, different sensing-assisted positioning modes are defined based on UE capabilities (for example, one or more capabilities such as a capability of storing environment information, a computing capability, and whether environment information has been stored), BS capabilities (for example, a capability that is of delivering a BS location and that meets a privacy requirement), and current statuses (uplink and downlink communication pressure). For different sensing-assisted positioning modes, algorithm steps may be decomposed on the BS and UE sides, to be applicable to different communication systems and application scenarios. Correspondingly, for different modes, there may be different signaling and procedures between the BS and the UE. In other words, some steps in FIG. 5 may be performed by either the BS or the UE, so that there are different signaling and procedures between the BS and the UE. For specific implementation, further refer to embodiments corresponding to FIG. 6, FIG. 8, and FIG. 10.

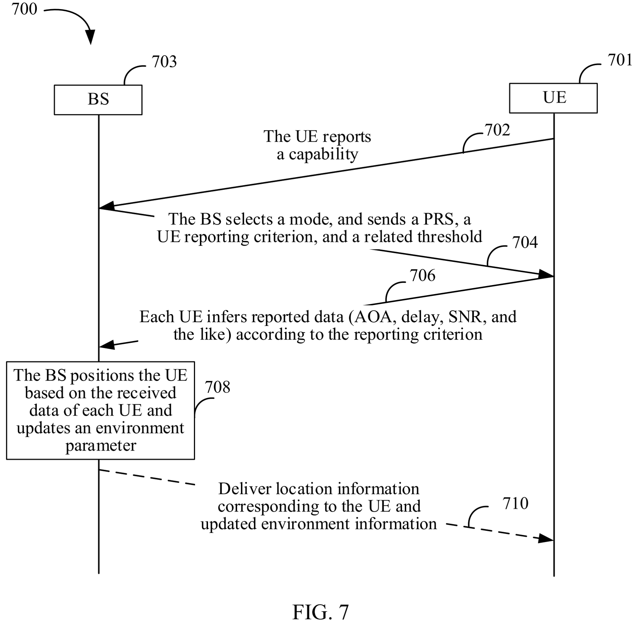

With reference to the foregoing first embodiment and FIG. 6 and FIG. 7, the following describes a sensing-assisted positioning mode (referred to as the mode 1) and a corresponding sensing-assisted positioning procedure in embodiments of this disclosure. Specifically, descriptions and beneficial effects of related implementations in FIG. 6 and FIG. 7 may be applied to or combined with the foregoing first embodiment.

FIG. 6 is a schematic flowchart of implementing a positioning algorithm according to some embodiments of this disclosure. As shown in FIG. 6, similar to the procedure 500, a procedure 600 includes steps such as environment sensing (602), point cloud data extraction (604), environment reconstruction and update (606), environment tracking (608), communication (610), multipath positioning fusion (612), and cost function calculation (614). Steps of environment sensing (602), point cloud data extraction (604), environment reconstruction and update (606), environment tracking (608), multipath positioning fusion (612), and cost function calculation (614) may be performed at a BS. Communication (610) is communication between the BS and a UE.

This mode has a high requirement on uplink data. For example, the uplink data is multipath information reported by the UE to the BS. A specific reporting criterion may include at least one of the following: For an SNR absolute value, for example, a path whose SNR absolute value is lower than an SNR threshold is not reported, so that data reporting according to this criterion can prevent the SNR value of the path from directly affecting positioning precision and environment reconstruction precision. For an SNR difference, for example, a path whose SNR difference from a path with a strongest SNR is greater than a threshold is not reported, so that data reporting according to this criterion can prevent a large SNR multipath difference from lowering positioning precision and environment reconstruction precision. For a maximum quantity of uploaded paths, when a quantity of multipaths reaches a threshold, positioning precision and environment reconstruction precision are almost not improved. Therefore, reporting of information about paths that do not help improve the positioning precision and the environment reconstruction precision can be avoided, and computing complexity is reduced. A Doppler absolute value indicates a degree of attention to a moving or static target. For example, a path whose Doppler absolute value is less than (static) or greater than (high-speed) a threshold is not reported. In this manner, uplink data reporting may be performed only for a target whose speed is of concern. For an AoA (angle of arrival) difference value, when an AoA difference between paths is less than a threshold, only one of the paths is uploaded. Joint positioning of two paths related to an AoA may not improve the positioning precision and environment reconstruction precision. Therefore, this avoids reporting information about a path that does not help improve the positioning precision and the environment reconstruction precision, and reduces computing complexity.

FIG. 7 is a diagram of a positioning procedure according to some embodiments of this disclosure. As shown in FIG. 7, in the procedure 700, in step 702, a UE 701 reports a UE capability to a BS 703, for example, reports capability information that is of the UE 701 and that is related to sensing-assisted positioning. For example, the capability information may include information about one or more capabilities such as a capability of storing environment information, a computing capability, and whether environment information has been stored. In step 704, the BS 703 selects a mode, and sends one or more of a PRS (Positioning Reference Signal, positioning reference signal), a reporting criterion of the UE 701, and a related threshold. The BS 703 selects the mode, that is, determines a sensing-assisted positioning mode (mode for short) for the UE 701. In some embodiments, the reporting criterion and the related threshold may be, for example, a criterion for reporting multipath information such as an AoA, a delay (delay), and an SNR sent by the UE 701 to the BS 703. Correspondingly, the threshold is a threshold corresponding to an SNR absolute value, an SNR difference, or an AoA (angle of arrival) difference value. In step 706, the UE 701 may report data (the AoA, the delay (delay), the SNR, and the like) according to the mode. In step 708, the BS 703 positions the UE 701 based on the received data reported by the UE 701, and updates an environment parameter. In step 710, the BS 703 delivers location information corresponding to the UE 701 and updated environment information to the UE 701. There may be one or more UEs 701. When there are a plurality of UEs 701, each UE 701 may communicate with the BS 703 according to the foregoing procedure.

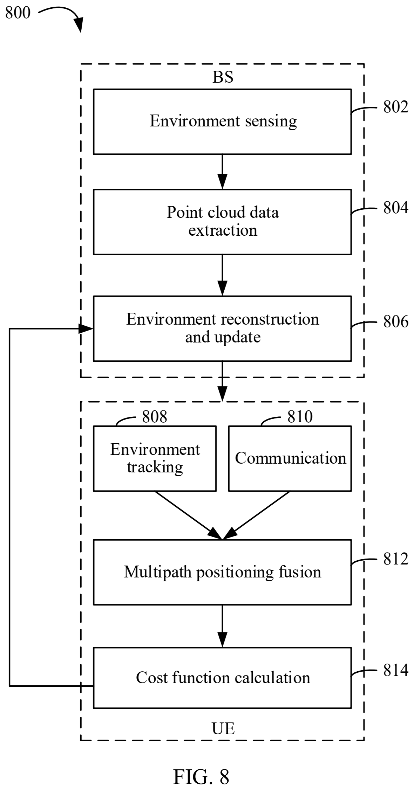

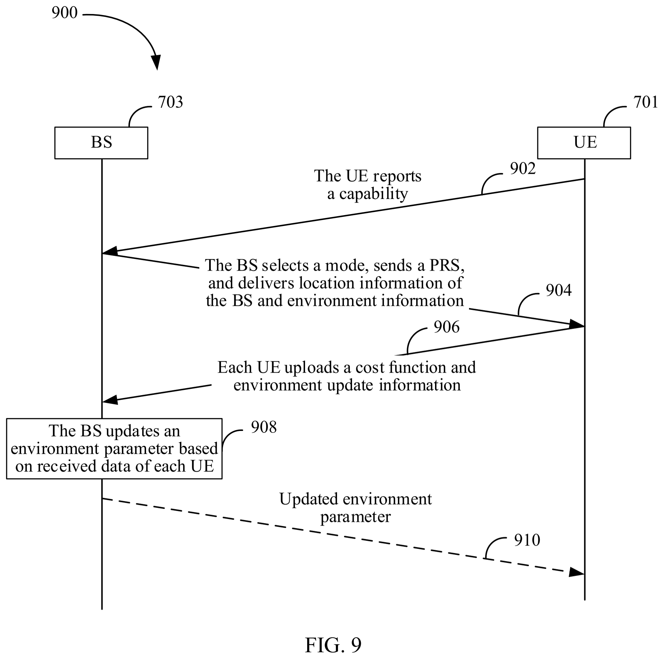

With reference to the foregoing second embodiment and FIG. 8 and FIG. 9, the following describes another sensing-assisted positioning mode (referred to as the mode 2) and a corresponding sensing-assisted positioning procedure in embodiments of this disclosure. Specifically, descriptions and beneficial effects of related implementations in FIG. 8 and FIG. 9 may be applied to or combined with the foregoing second embodiment.

FIG. 8 is a schematic flowchart of implementing a positioning algorithm according to some embodiments of this disclosure. As shown in FIG. 8, in a procedure 800, steps of environment sensing (802), point cloud data extraction (804), and environment reconstruction and update (806) may be performed by a BS 703, and steps of environment tracking (808), multipath positioning fusion (812), and cost function calculation (814) may be performed by a UE 701. In a sensing-assisted positioning process, the BS 703 communicates (810) with the UE 701. In some embodiments, the BS 703 may perform a part of position computing, that is, a part of iterations. In general, iteration is performed by the UE 701 and the BS

**EP 4 694 423 A1**

703.

In this mode, the UE 701 needs to complete most calculations, and the UE 701 needs to upload a cost function and environment update information. The cost function is defined as follows:

$$f = \sum_{k=1}^{K} \sqrt{\sum (\boldsymbol{p}_k - \boldsymbol{c})^2}$$

$p_k$ is a positioning point of a $k^{th}$ path, and c is the center of the positioning point. In some other embodiments, the UE 701 may directly upload a positioning point of each path, and the base station BS 703 customizes calculation of a loss function. An environment plane update parameter (that is, the environment update information) may include a serial number, a correction distance 1, and a correction angle β of a reconstructed plane. In some embodiments, the reconstructed plane may be represented in another form: a serial number and a vertex position of the reconstructed plane.

FIG. 9 is a diagram of a positioning procedure according to some embodiments of this disclosure. As shown in FIG. 9, in the procedure 900, in step 902, a UE 710 reports a UE capability to a BS 703, for example, reports capability information that is of the UE 701 and that is related to sensing-assisted positioning. In step 904, the BS 703 selects a mode, and sends a PRS, location information of the BS 703, and environment information, where the environment information may be used to perform iterative computing on the UE 701 side. A step of performing the iterative computing by the UE 701 is not shown in FIG. 9. In step 904, the BS 703 selects the mode, that is, determines a sensing-assisted positioning mode for the UE 701. At step 906, the UE 701 may upload data according to the mode, for example, upload a cost function and environment update information. The environment update information is environment information determined by the UE 701 side through the iterative computing. In step 908, the BS 703 updates an environment parameter (the environment information) for the UE 701 based on the received data uploaded by the UE 701. In this process, the BS 703 may perform iterative computing based on the environment update information uploaded by the UE 701, to obtain updated environment information. In some embodiments, the procedure 900 may further include step 910. In step 910, the BS 703 may deliver location information corresponding to the UE 701 and the updated environment information to the UE 701. There may be one or more UEs 701. When there are a plurality of UEs 701, each UE 701 may communicate with the BS 703 according to the foregoing procedure. In some embodiments, the cost function may indicate precision of a reconstructed plane. The BS 703 may determine, according to the cost function, whether to update the environment parameter. After updating the environment parameter, the BS 703 may send an updated environmental parameter to the UE 701, and iterative computing continues on the UE 701 side, so that a computing load of the UE 701 can be reduced.

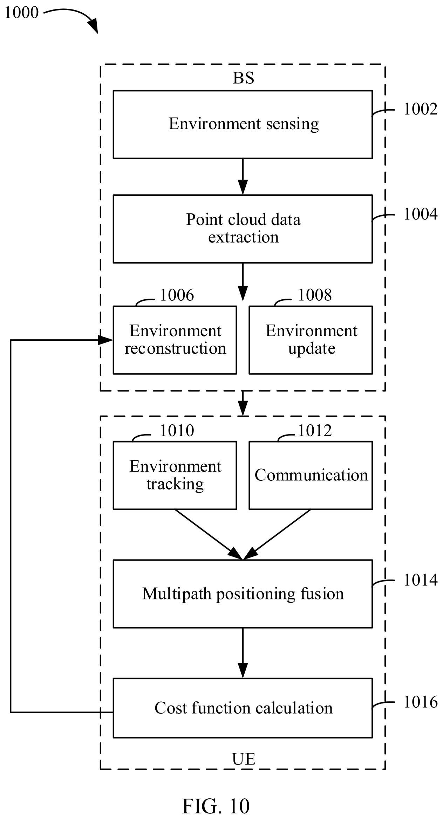

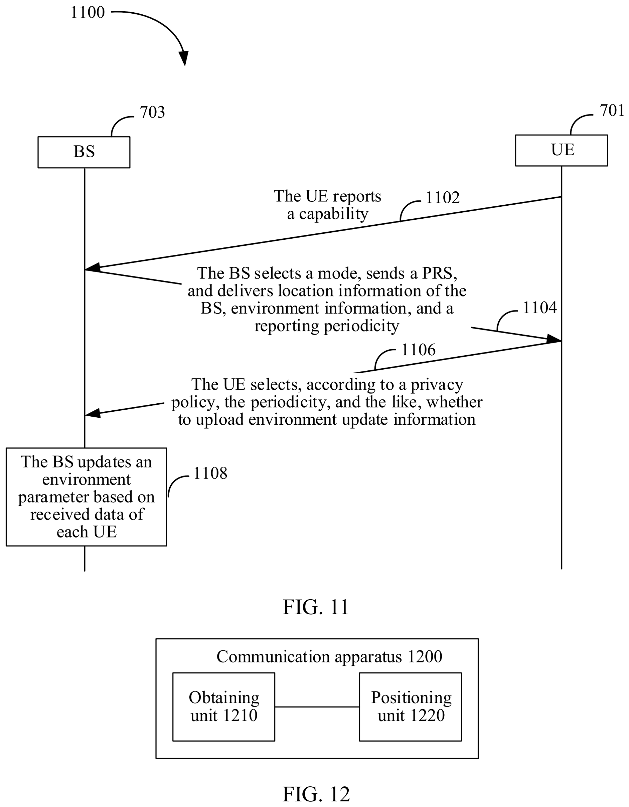

With reference to the foregoing third embodiment and FIG. 10 and FIG. 11, the following describes a sensing-assisted positioning mode (referred to as the mode 3) and a corresponding sensing-assisted positioning procedure in embodiments of this disclosure. Specifically, descriptions and beneficial effects of related implementations in FIG. 10 and FIG. 11 may be applied to or combined with the foregoing third embodiment.

FIG. 10 is a schematic flowchart of implementing a positioning algorithm according to some embodiments of this disclosure. As shown in FIG. 10, in a procedure 1000, steps of environment sensing (1002), point cloud data extraction (1004), and environment reconstruction (1006) may be performed by a BS 703, and steps of environment update (1008), environment tracking (1010), multipath positioning fusion (1014), and cost function calculation (1016) may be performed by a UE 701. In a sensing-assisted positioning process, the BS 703 communicates (1012) with the UE 701. Iterative computing is performed at the UE 701. In this mode, the UE 701 needs to complete almost all iterative computing. The BS 703 needs to deliver a location of the BS 703, environment information, and a PRS. In some embodiments, the BS 703 may further select to deliver a reporting periodicity of the UE 701. In a scenario in which privacy of the terminal device 110 is protected, the UE 701 may select, according to a privacy policy and the periodicity, whether to upload environment update information, to facilitate privacy protection.

FIG. 11 is a diagram of a positioning procedure according to some embodiments of this disclosure. As shown in FIG. 11, in the procedure 1100, in step 1102, a UE 701 reports a capability to a BS 703. In step 1104, the BS 703 selects a mode, sends a PRS, and delivers location information of the BS 703, environment information, and a reporting periodicity to the UE 701, so that the UE performs iterative computing of a positioning algorithm to determine updated environment information. In step 1106, the UE 701 may select, according to a privacy policy, the periodicity, and the like, whether to upload environment update information (that is, the updated environment information). In step 1108, the BS 703 may update an environment parameter based on received data uploaded by each UE 701, that is, update local environment information based on the environment update information uploaded by the UE 701. In some embodiments, there may be a plurality of UEs in an environment. In the foregoing manner, the BS 703 may update the environment parameter based on the received data uploaded by each UE 701, so that environment information on the BS side is more precise, and can be used to position another UE. This helps improve positioning precision.

Table 2 shows a comparison between functions of the UE and the BS in different sensing-assisted positioning modes.

**12**

Table 2

| Mode | Division of BS and UE functions | BS delivery | UE upload |
|------|----------------------------------|-------------|-----------|
| 1 | BS: environment sensing, point cloud data extraction, environment reconstruction and update, environment tracking, multipath positioning fusion, and cost function calculation<br>UE: communication | The BS does not deliver location information, a downlink PRS, and a UE reporting criterion | The UE reports multipath information, such as an AoA, a delay, and an SNR, as required |
| 2 | BS: environment sensing, point cloud data extraction, and environment reconstruction and update<br>UE: environment tracking, communication, multipath positioning fusion, and cost function calculation | The BS delivers location information, environment information, and a downlink PRS | The UE uploads a cost function, environment update information, a scattering plane attribute, and the like |
| 3 | BS: environment sensing, point cloud data extraction, environment reconstruction and update (initialization)<br>UE: environment reconstruction and update (update), environment tracking, communication, multipath positioning fusion, and cost function calculation | The BS delivers location information, environment information, a downlink PRS, and a UE reporting periodicity | The UE selects whether to upload environment information according to a privacy policy and the periodicity |

A definition of a data transmission format and a transmission procedure are particularly important. In embodiments of this disclosure, a data transmission format and a procedure for sensing environment-assisted positioning are established, and sensing-assisted positioning is performed based on environment information, to improve positioning precision and sensing precision. In addition, different modes are defined to adapt to different communication systems and application scenarios.

FIG. 12 is a diagram of main composition of a possible communication apparatus according to an embodiment of this disclosure. The communication apparatuses may implement functions of the communication apparatus in the foregoing method embodiments, and therefore can also implement beneficial effects of the foregoing method embodiments. In this embodiment of this disclosure, for the terminal device 110 or the network device 120 that is shown in FIG. 1A and that is used as an example of the communication apparatus, the communication apparatus may be, for example, the terminal device 110, or may be a module (for example, a chip) used in the terminal device 110. Alternatively, the communication apparatus may be, for example, the network device 120, or may be a module (for example, a chip) used in the network device 120.

For example, the communication apparatus implements a function of the terminal device 110. As shown in FIG. 12, the communication apparatus 1200 includes an obtaining unit 1210 and a positioning unit 1220. The communication apparatus may be configured to implement a function of the communication apparatus in the method embodiment shown in FIG. 2. In some embodiments, the obtaining unit 1210 may be a transceiver, and the positioning unit 1220 may be a processor.

When the communication apparatus 1200 is configured to implement a function of the communication apparatus (for example, the communication apparatus is the terminal device 110) in the method embodiment shown in FIG. 2, the obtaining unit 1210 is configured to obtain positioning assistance information related to sensing-assisted positioning, where the positioning assistance information includes environment information. For example, the environment information may be environment information received from the network device 120. The positioning unit 1220 is configured to perform sensing-assisted positioning based on the environment information.

For a case in which the communication apparatus implements a function of the network device 120, refer to the foregoing descriptions of the procedure performed by the network device 120. Details are not described. In addition, for more detailed descriptions of the obtaining unit 1210 and the positioning unit 1220, refer to the related descriptions in the foregoing method embodiments. Details are not described herein again.

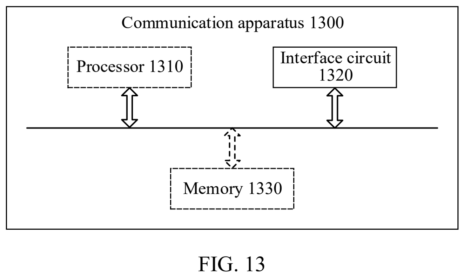

As shown in FIG. 13, a communication apparatus 1300 includes an interface circuit 1320. Optionally, a processor 1310 may be further included. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run instructions, or store data generated after the processor 1310 runs instructions.

When the communication apparatus 1300 is configured to implement the method in the method embodiment in FIG. 2, the interface circuit 1320 is configured to perform a function of the obtaining unit 1210.

When the communication apparatus is a chip used in a terminal device 110, the chip in the terminal device implements the function of the terminal device 110 in the foregoing method embodiments. The chip in the terminal device receives information from another module (for example, a radio frequency module or an antenna) in the terminal device 110, where the information may be sent by another terminal device 110. Alternatively, the chip in the terminal device sends information to another module (for example, a radio frequency module or an antenna) in the terminal device 110, where the information is sent to another terminal device 110.

It may be understood that the processor in embodiments of this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this disclosure provides a communication system. The communication system may include the communication apparatus in the embodiment shown in FIG. 12, for example, the terminal device 110 or the network device 120. Optionally, the terminal device 110 or the network device 120 in the communication system may perform the communication method shown in FIG. 2. In some other embodiments, the communication system may include a communication apparatus that can perform the communication method shown in FIG. 2, for example, the terminal device 110 or the network device 120.

An embodiment of this disclosure further provides a circuit. The circuit may be coupled to a memory, and may be configured to perform a procedure related to the terminal device 110 or the network device 120 in any one of the foregoing method embodiments. A chip system may include a chip, and may further include another component, for example, a memory or a transceiver.

It should be understood that the processor mentioned in embodiments of this disclosure may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this disclosure may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this disclosure. The execution sequences of the processes should be determined based on functions and internal logic of the processes, and should not be construed as any limitation on the implementation processes of embodiments of this disclosure.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this disclosure, it should be understood that the disclosed communication method and apparatus may be implemented in other manners. For example, the described apparatus embodiments are merely examples. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this disclosure may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this disclosure essentially, the part making contributions, or a part of the technical solutions may be embodied in a form of a software product. The computer software product is stored in a storage medium, and includes a plurality of instructions for instructing a computer device (which may be a personal computer, a server, the network device 120, or the like) to perform all or some of the steps in the methods in embodiments of this disclosure. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage, a disk storage medium or another magnetic storage device, or any other medium that can be used to carry or store expected program code in a form of an instruction or a data structure and that can be accessed by a computer.

The foregoing descriptions are merely specific implementations of this disclosure, but are not intended to limit the protection scope of embodiments of this disclosure. Any variation or replacement readily figured out by a person skilled in the art within the technical scope disclosed in embodiments of this disclosure shall fall within the protection scope of embodiments of this disclosure. Therefore, the protection scope of embodiments of this disclosure should be subject to the protection scope of the claims.

**Claims**

1. A communication method, comprising:

   obtaining, by a network apparatus, first positioning assistance information, wherein the first positioning assistance information comprises first environment information; and
   performing, by the network apparatus, positioning based on the first environment information.

2. The method according to claim 1, wherein the first environment information is initial environment information, the first positioning assistance information further comprises multipath information, and the method further comprises:

   sending, by the network apparatus, a reporting criterion about the multipath information to a terminal apparatus; and
   receiving, by the network apparatus, the multipath information reported by the terminal apparatus according to the reporting criterion.

3. The method according to claim 2, wherein performing the positioning comprises:
   determining, by the network apparatus, location information of the terminal apparatus based on the first environment information and the multipath information.

4. The method according to claim 3, wherein the method further comprises:
sending, by the network apparatus, at least one of the location information of the terminal apparatus and second environment information to the terminal apparatus, wherein the second environment information is obtained based on the first environment information.

5. The method according to claim 1, wherein the positioning is first positioning, and the method further comprises:
before obtaining the first positioning assistance information, sending, by the network apparatus, second positioning assistance information to the terminal apparatus, wherein the second positioning assistance information is used by the terminal apparatus to perform second positioning.

6. The method according to claim 5, wherein the second positioning assistance information comprises initial environment information and location information of the network apparatus.

7. The method according to claim 6, wherein the first positioning assistance information further comprises a cost function obtained by the terminal apparatus through the second positioning, and obtaining the first positioning assistance information comprises:
receiving, by the network apparatus, the cost function and the first environment information from the terminal apparatus, wherein the first environment information is obtained based on the initial environment information.

8. The method according to any one of claims 5 to 7, wherein performing the first positioning comprises:
obtaining, by the network apparatus, third environment information based on the cost function and the first environment information.

9. The method according to claim 8, further comprising:
sending, by the network apparatus, the third environment information to the terminal apparatus.

10. The method according to any one of claims 1 to 9, wherein the first environment information comprises at least one group of the following information:

a serial number of a reconstructed plane of an environment and a correction distance and a correction angle of the reconstructed plane; or
the serial number of the reconstructed plane and a vertex position of the reconstructed plane.

11. A communication method, comprising:

obtaining, by a terminal apparatus, second positioning assistance information, wherein the second positioning assistance information comprises initial environment information; and
performing, by the terminal apparatus, positioning based on the initial environment information.

12. The method according to claim 11, wherein the second positioning assistance information further comprises location information of a network apparatus, and obtaining the second positioning assistance information comprises:
receiving, by the terminal apparatus, the initial environment information and the location information of the network apparatus that are sent by the network apparatus.

13. The method according to claim 12, wherein performing the positioning comprises:
determining, by the terminal apparatus, first environment information based on the location information of the network apparatus and the initial environment information.

14. The method according to claim 13, wherein a cost function is further obtained through the positioning, and the method further comprises:
sending, by the terminal apparatus, the cost function and the first environment information to the network apparatus, wherein the cost function is used by the network apparatus to perform positioning.

15. The method according to claim 14, further comprising:
after sending the cost function and the first environment information to the network apparatus, receiving, by the terminal apparatus, third environment information sent by the network apparatus, wherein the third environment information is obtained by the network apparatus through the positioning.

**16.** The method according to claim 13, further comprising:
receiving, by the terminal apparatus, a reporting periodicity sent by the network apparatus, wherein the reporting periodicity is used by the terminal apparatus to report the first environment information.

**17.** The method according to claim 16, wherein reporting the first environment information comprises:
sending, by the terminal apparatus, the first environment information to the network apparatus based on the reporting periodicity.

**18.** The method according to claim 16 or 17, further comprising: obtaining, by the terminal apparatus, privacy setting information, wherein reporting the first environment information comprises:
when determining that the privacy setting information allows reporting of the first environment information, sending, by the terminal apparatus, the first environment information to the network apparatus.

**19.** The method according to any one of claims 11 to 18, wherein the initial environment information comprises at least one group of the following information:

a serial number of a reconstructed plane of an environment and a correction distance and a correction angle of the reconstructed plane; or
the serial number of the reconstructed plane and a vertex position of the reconstructed plane.

**20.** A communication apparatus, comprising:

an obtaining unit, configured to obtain first positioning assistance information, wherein the first positioning assistance information comprises first environment information; and
a positioning unit, configured to perform positioning based on the first environment information.

**21.** The apparatus according to claim 20, wherein the first environment information is initial environment information, the first positioning assistance information further comprises multipath information, and the apparatus further comprises:

a sending unit, configured to send a reporting criterion about the multipath information to a terminal apparatus; and
a receiving unit, configured to receive the multipath information reported by the terminal apparatus according to the reporting criterion.

**22.** The apparatus according to claim 21, wherein the positioning unit is further configured to:
determine location information of the terminal apparatus based on the first environment information and the multipath information.

**23.** The apparatus according to claim 22, wherein the sending unit is further configured to:
send at least one of the location information of the terminal apparatus and second environment information to the terminal apparatus, wherein the second environment information is obtained based on the first environment information.

**24.** The apparatus according to claim 20, wherein the positioning is first positioning, and the apparatus further comprises a sending unit, wherein
before the obtaining unit obtains the first positioning assistance information, the sending unit is configured to send second positioning assistance information to the terminal apparatus, wherein the second positioning assistance information is used by the terminal apparatus to perform second positioning.

**25.** The apparatus according to claim 24, wherein the second positioning assistance information comprises initial environment information and location information of the network apparatus.

**26.** The apparatus according to claim 24 or 25, wherein the first positioning assistance information further comprises a cost function obtained by the terminal apparatus through the second positioning, and the obtaining unit is further configured to:
receive the cost function and the first environment information from the terminal apparatus, wherein the first environment information is obtained based on the initial environment information.

27. The apparatus according to any one of claims 24 to 26, wherein the positioning unit is further configured to:
obtain third environment information based on the cost function and the first environment information.

28. The apparatus according to claim 27, wherein the sending unit is further configured to:
send the third environment information to the terminal apparatus.

29. The apparatus according to any one of claims 20 to 28, wherein the first environment information comprises at least one group of the following information:

   a serial number of a reconstructed plane of an environment and a correction distance and a correction angle of the reconstructed plane; or
   the serial number of the reconstructed plane and a vertex position of the reconstructed plane.

30. A communication apparatus, comprising:

   an obtaining unit, configured to obtain second positioning assistance information, wherein the second positioning assistance information comprises initial environment information; and
   a positioning unit, configured to perform positioning based on the initial environment information.

31. The apparatus according to claim 30, wherein the second positioning assistance information further comprises location information of a network apparatus, and the obtaining unit is further configured to:
receive the initial environment information and the location information of the network apparatus that are sent by the network apparatus.

32. The apparatus according to claim 31, wherein the positioning unit is further configured to:
determine first environment information based on the location information of the network apparatus and the initial environment information.

33. The apparatus according to claim 32, wherein the positioning unit is further configured to obtain a cost function, and the apparatus further comprises:
a sending unit, configured to send the cost function and the first environment information to the network apparatus, wherein the cost function is used by the network apparatus to perform positioning.

34. The apparatus according to claim 33, wherein the apparatus further comprises a receiving unit, wherein
after the sending unit sends the cost function and the first environment information to the network apparatus, the receiving unit is configured to receive third environment information sent by the network apparatus, wherein the third environment information is obtained by the network apparatus through the positioning.

35. The apparatus according to claim 32, further comprising:
a receiving unit, configured to receive a reporting periodicity sent by the network apparatus, wherein the reporting periodicity is used by the terminal apparatus to report the first environment information.

36. The apparatus according to claim 35, further comprising:
a sending unit, configured to send the first environment information to the network apparatus based on the reporting periodicity.

37. The apparatus according to claim 35 or 36, wherein the terminal apparatus obtains privacy setting information, and the apparatus further comprises:
a sending unit, configured to: when it is determined that the privacy setting information allows reporting of the first environment information, send the first environment information to the network apparatus.

38. The apparatus according to any one of claims 30 to 37, wherein the initial environment information comprises at least one group of the following information:

   a serial number of a reconstructed plane of an environment and a correction distance and a correction angle of the reconstructed plane; or
   the serial number of the reconstructed plane and a vertex position of the reconstructed plane.

39. A communication apparatus, comprising a processor and a memory storing instructions, wherein when the instructions are executed by the processor, the method according to any one of claims 1 to 10 or claims 11 to 19 is performed.

40. A computer-readable storage medium, wherein the computer-readable storage medium stores instructions, and when the instructions are executed, the method according to any one of claims 1 to 10 or claims 11 to 19 is performed.

41. A computer program product, wherein the computer program product comprises instructions, and when the instructions are executed, the method according to any one of claims 1 to 10 or claims 11 to 19 is performed.

FIG. 1A

FIG. 1B

FIG. 1C

200

```
┌─────────────────────────────────────┐
│ Obtain positioning assistance information, │
│ where the positioning assistance information │── 210
│ includes environment information      │
└─────────────────────────────────────┘
                    │
                    ▼
┌─────────────────────────────────────┐
│ Perform positioning based on the     │
│ environment information               │── 220
└─────────────────────────────────────┘
```

FIG. 2

Distance error

302

304

α

Normal direction error

FIG. 3

3rd path
positioning

406

d3

1st path positioning    Positioning center

d1

402    404

d3

Actual UE location

408

d2

2nd path positioning    410

FIG. 4

500

```
                    ┌──────────────────────────┐
                    │                          │── 502
                    │   Environment sensing    │
                    │                          │
                    └──────────────────────────┘
                                 │
                                 ▼
                    ┌──────────────────────────┐
                    │                          │── 504
                    │     Point cloud data     │
                    │       extraction         │
                    └──────────────────────────┘
                                 │
                                 ▼
                    ┌──────────────────────────┐
          ┌────────▶│ Environment reconstruction│── 506
          │         │       and update          │
          │         └──────────────────────────┘
          │                      │
          │                      ▼
          │      508 ─┐   510 ─┐
          │         ┌────────┐ ┌──────────────┐
          │         │Environ-│ │              │
          │         │ ment   │ │Communication │
          │         │tracking│ │              │
          │         └────────┘ └──────────────┘
          │              │          │
          │              └────┐ ┌───┘
          │                   ▼ ▼
          │         ┌──────────────────────────┐
          │         │Multipath positioning fusion│── 512
          │         └──────────────────────────┘
          │                      │
          │                      ▼
          │         ┌──────────────────────────┐
          └─────────│ Cost function calculation │── 514
                    └──────────────────────────┘
```

FIG. 5

FIG. 6

FIG. 7

FIG. 8

900

703

BS

701

UE

The UE reports
a capability

902

The BS selects a mode, sends a PRS,
and delivers location information of
the BS and environment information

904

906

Each UE uploads a cost function and
environment update information

The BS updates an
environment parameter based
on received data of each UE

908

Updated environment
parameter

910

FIG. 9

1000

BS

| Environment sensing | — 1002 |

↓

| Point cloud data extraction | — 1004 |

↓

1006
| Environment reconstruction |

1008
| Environment update |

↓

UE

1010
| Environment tracking |

1012
| Communication |

↓

| Multipath positioning fusion | — 1014 |

↓

| Cost function calculation | — 1016 |

FIG. 10

1100

703

BS

701

UE

The UE reports
a capability — 1102

The BS selects a mode, sends a PRS,
and delivers location information of the
BS, environment information, and a
reporting periodicity — 1104

— 1106

The UE selects, according to a privacy
policy, the periodicity, and the like, whether
to upload environment update information

The BS updates an
environment
parameter based on
received data of
each UE — 1108

FIG. 11

Communication apparatus 1200

Obtaining
unit 1210

Positioning
unit 1220

FIG. 12

Communication apparatus 1300

Processor 1310

Interface circuit 1320

Memory 1330

FIG. 13

## INTERNATIONAL SEARCH REPORT

| International application No. |
| --- |
| **PCT/CN2023/089009** |

| A. | CLASSIFICATION OF SUBJECT MATTER |
| --- | --- |

H04W64/00(2009.01)i

According to International Patent Classification (IPC) or to both national classification and IPC

| B. | FIELDS SEARCHED |
| --- | --- |

Minimum documentation searched (classification system followed by classification symbols)

IPC:H04W; H04L; H04Q

Documentation searched other than minimum documentation to the extent that such documents are included in the fields searched

Electronic data base consulted during the international search (name of data base and, where practicable, search terms used)

CJFD, CNTXT, ENTXT, ENTXTC, WPABS, WPABSC, 3GPP, IEEE: 辅助定位, 感知, 环境信息, 基站, 网络设备, 用户设备, 重构, auxiliary, assistant, supplementary, position, location, sense, environment, BS, network equipment, user equipment, UE, reconfiguration, reconsitution, restructure

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115865860 A (VIVO COMMUNICATION TECHNOLOGY CO., LTD.) 28 March 2023 (2023-03-28) <br> description, paragraphs [0129]-[0319] | 1-41 |
| X | WO 2022033046 A1 (CHINA MOBILE SHANGHAI ICT CO., LTD: CM INTELLIGENT MOBILITY; CHINA MOBILE COMMUNICATIONS GROUP CO., LTD.) 17 February 2022 (2022-02-17) <br> description, paragraphs [0050]-[0126] | 1-41 |
| A | CN 114980309 A (SHENZHEN YISHIHUOLALA TECHNOLOGY CO., LTD.) 30 August 2022 (2022-08-30) <br> entire document | 1-41 |
| A | US 2021365024 A1 (BEIJING BAIDU NETCOM SCIENCE TECHNOLOGY CO., LTD.) 25 November 2021 (2021-11-25) <br> entire document | 1-41 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 January 2024** | **08 January 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089009**

| Patent document cited in search report | | | Publication date (day/month/year) | Patent family member(s) | | | Publication date (day/month/year) |
|---|---|---|---|---|---|---|---|
| CN | 115865860 | A | 28 March 2023 | None | | | |
| WO | 2022033046 | A1 | 17 February 2022 | US | 2023236325 | A1 | 27 July 2023 |
| | | | | JP | 2023530651 | A | 19 July 2023 |
| | | | | EP | 4155678 | A1 | 29 March 2023 |
| | | | | EP | 4155678 | A4 | 20 December 2023 |
| CN | 114980309 | A | 30 August 2022 | None | | | |
| US | 2021365024 | A1 | 25 November 2021 | WO | 2020147316 | A1 | 23 July 2020 |

Form PCT/ISA/210 (patent family annex) (July 2022)